# DEMANDE DE BREVET EUROPEEN

(11) **EP 3 926 793 A1**
(43) Date de publication de la demande: **22.12.2021**
(21) Numéro de dépôt: 21179608.1
(22) Date de dépôt: 15.06.2021
(51) Int. Cl.: H02K 1/18, H02K 5/02

(54) **EQUIPEMENT ÉLECTRIQUE À TOLÉRANCE THERMIQUE AMÉLIORÉE, ET VÉHICULE ASSOCIÉ**

(30) Priorité: 16.06.2020 FR 2006256
(71) Demandeur: ALSTOM Transport Technologies, 93400 Saint-Ouen (FR)
(72) Inventeur: GUIGNIER, Gilles, 90000 Belfort (FR); RAGUIN, Bruno, 25290 Ornans (FR)
(74) Mandataire: Lavoix

(57) **Abrégé**

L'invention concerne un équipement (20) électrique comprenant :
- une carcasse (30) de protection comprenant des parois latérales (46) réalisées en un premier matériau et au moins un flasque (48) d'extrémité, la carcasse (30) définissant un espace interne (32) sensiblement cylindrique présentant un axe central (A) ;
- un stator (34) réalisé en au moins un deuxième matériau, disposé dans l'espace interne (32) autour de l'axe central (A).

L'équipement (20) comprend de plus :
- un organe de centrage (42), constitué du premier matériau, disposé dans l'espace interne (32), en appui radial contre les parois latérales (46),
le stator (34) étant fixé à l'organe de centrage (42) selon une direction sensiblement parallèle à l'axe central (A).

## Description

La présente invention concerne un équipement électrique comprenant :
- une carcasse de protection comprenant des parois latérales réalisées en un premier matériau et au moins un flasque d'extrémité, la carcasse définissant un espace interne sensiblement cylindrique présentant un axe central ;
- un stator réalisé en au moins un deuxième matériau, disposé dans l'espace interne autour de l'axe central.

L'invention concerne également un véhicule comprenant l'équipement électrique précédent.

Les équipements électriques tournants, comme les moteurs électriques ou les alternateurs, comprennent généralement un stator fixe et un rotor monté sur un arbre rotatif, disposés dans une carcasse de protection également appelée carter.

Le stator est constitué d'un assemblage de feuillets métalliques magnétiques, notamment réalisé en métaux ferreux, par exemple en acier. La carcasse de protection est généralement réalisée en fonte, qui est un matériau avantageux en termes de durabilité et de coût de production.

Dans certains cas, afin d'améliorer la dissipation thermique dans l'espace interne de la carcasse, ainsi que pour réduire la masse de l'équipement, il est désirable de réaliser au moins une partie de la carcasse en métaux plus légers et meilleurs conducteurs thermiques, par exemple en alliage d'aluminium. La réduction de la masse totale de l'équipement est particulièrement pertinente dans le cas d'un moteur monté sur une structure mobile, comme par exemple un moteur de propulsion d'un véhicule.

Cependant, ces équipements peuvent se heurter à des problèmes de perte de fixation du stator au cours du fonctionnement, dus à la différence entre les coefficients de dilatation thermique entre les deux matériaux constituant respectivement le stator et les parois latérales de la carcasse.

En effet, le stator est habituellement maintenu en position dans la carcasse par un serrage radial appliqué par les parois latérales. Or, les parois en alliage d'aluminium ont tendance à se dilater plus que le stator en matériau ferreux lors de l'élévation de la température interne de l'équipement au cours de son fonctionnement. Il s'ensuit une perte du serrage du stator, ce qui peut entrainer une rotation du stator et/ou un décentrage, compromettant le fonctionnement ou la fiabilité de l'équipement.

Ainsi, un but de l'invention est de fournir un équipement électrique dont la carcasse est constituée au moins en partie de matériaux allégés et permettant une bonne dissipation thermique, permettant de garantir la fixation et le centrage du stator au cours du fonctionnement.

A cet effet, l'invention a pour objet un équipement électrique du type précité, dans lequel l'équipement comprend de plus :
- un organe de centrage, constitué du premier matériau, disposé dans l'espace interne, en appui radial contre les parois latérales,
le stator étant fixé à l'organe de centrage selon une direction sensiblement parallèle à l'axe central.

Un tel équipement présente une tolérance améliorée aux variations thermiques, l'organe de centrage se dilatant au même rythme que les parois latérales et garantissant le maintien de la fixation et du centrage du stator.

Selon des modes de réalisation particuliers, l'équipement selon l'invention présente l'une ou plusieurs des caractéristiques suivantes, prise(s) isolément ou selon toute combinaison techniquement réalisable :
- l'organe de centrage comprend une pluralité, de préférence au moins trois, points de fixation au stator, répartis régulièrement autour de l'axe central ;
- chaque point de fixation de l'organe de centrage comprend un orifice axial traversant, le stator comprenant une pluralité de conduits de fixation axiaux, chaque conduit débouchant en regard d'un des orifices de l'organe de centrage, l'équipement comprenant une pluralité d'organes de fixation, chaque organe de fixation étant engagé dans un des orifices de l'organe de centrage et dans le conduit correspondant du stator ;
- les conduits du stator sont traversants et débouchent en regard d'un des flasques, le flasque comprenant des perforations débouchant en regard des conduits, chaque organe de fixation étant engagé dans une des perforations du flasque ;
- au moins un des organes de fixation comprend un barreau métallique présentant au moins une extrémité filetée ;
- le stator comprend une pluralité de tôles feuilletées s'étendant sensiblement perpendiculairement à l'axe central, les tôles feuilletées étant fixées entre elles par des cordons de soudure s'étendant parallèlement à l'axe central, au droit des points de fixation de l'organe de centrage ;
- l'organe de centrage présente une forme annulaire, et définit une surface périphérique externe en appui radial sur les parois latérales ;
- l'équipement comprend un arbre disposé dans l'espace interne, mobile en rotation autour de l'axe central, l'arbre portant un rotor magnétique ;
- l'équipement est un moteur électrique.

L'invention concerne également un véhicule, notamment routier ou ferroviaire, comprenant un équipement tel que décrit plus haut.

L'invention sera mieux comprise à la lecture de la description qui suit, donnée uniquement à tire d'exemple et faite en référence aux dessins annexés, parmi lesquels :
- [Fig 1] la figure 1 est une vue de côté d'un véhicule selon un mode de réalisation de l'invention ;
- [Fig 2] la figure 2 est une vue en coupe longitudinale d'un équipement électrique selon l'invention ; et
- [Fig 3] la figure 3 est une vue en coupe transversale de l'équipement de la figure 1.

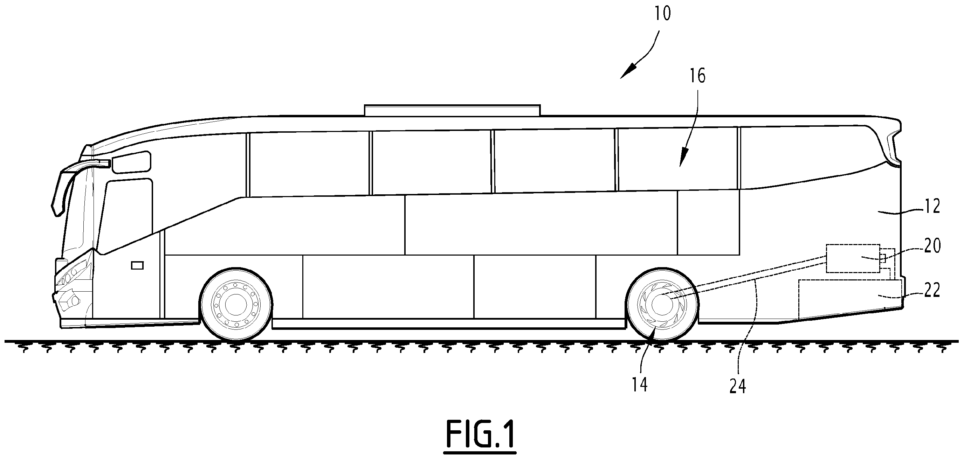

Un véhicule 10 est représenté sur la figure 1, comprenant une caisse 12 et des roues 14.

Le véhicule 10 est un véhicule de transport routier, destiné à accueillir des passagers dans un compartiment 16 défini par la caisse 12.

Le véhicule 10 est un véhicule à propulsion électrique, et comprend au moins un moteur électrique 20, une batterie 22 alimentant le moteur électrique 20 et un dispositif de transmission 24 transmettant un couple moteur du moteur électrique 20 aux roues 14.

En variante, le véhicule 10 est un véhicule à propulsion hybride. Par « hybride », on entend que le véhicule 10 comprend au moins un moteur à explosion en plus du moteur électrique 20, les deux moteurs fonctionnant en alternance et/ou simultanément, en fonction des conditions de roulement.

En variante, le véhicule 10 est un véhicule ferroviaire, par exemple un véhicule de transport urbain ou péri-urbain, ou encore un train à moyenne ou grande vitesse.

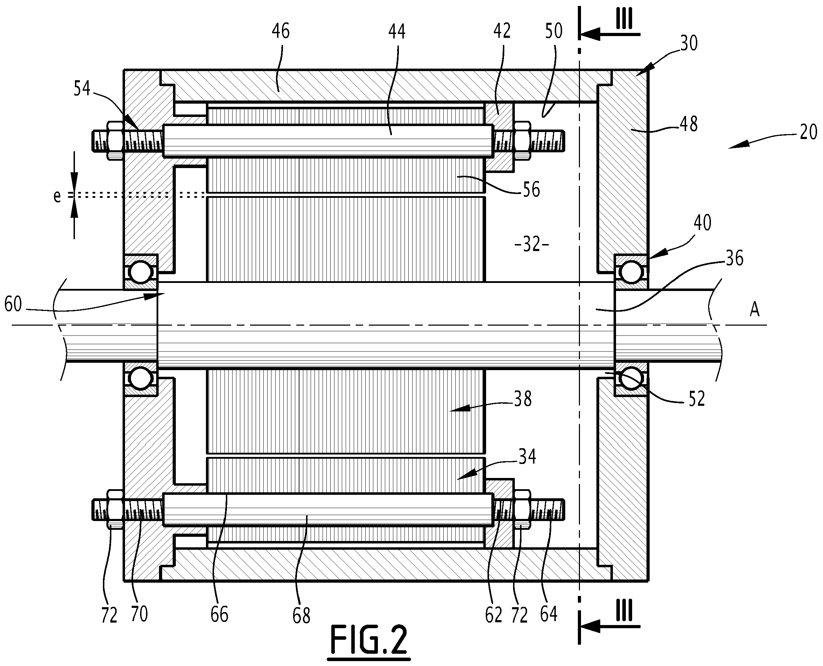

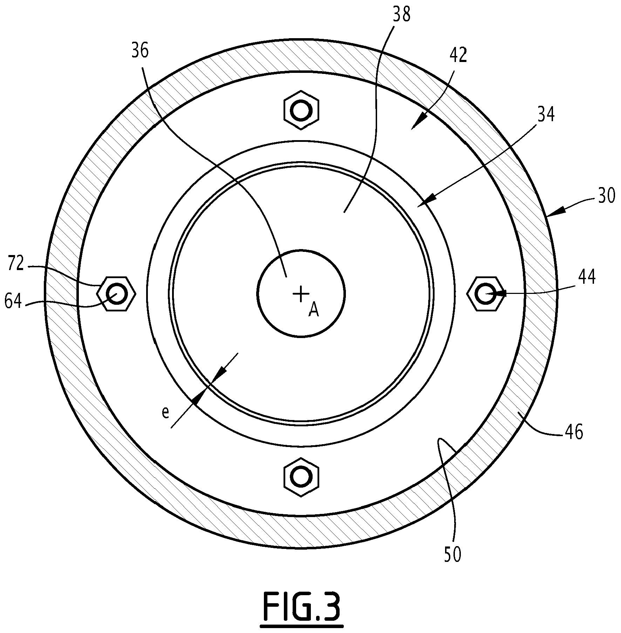

Le moteur électrique 20 est partiellement représenté sur les figures 2 et 3.

Le moteur électrique 20 comprend une carcasse 30 de protection définissant un espace interne 32 sensiblement cylindrique, ainsi qu'un stator 34 et un arbre 36 portant un rotor 38, contenus dans l'espace interne 32.

Le moteur électrique 20 comprend également des paliers de roulement 40 portant l'arbre 36, un organe de centrage 42 du stator 34 dans l'espace interne 32 et au moins un organe de fixation 44 de l'organe de centrage 42 au stator 34.

Le moteur électrique 20 est décrit ci-dessous en référence à un axe A définissant une direction axiale. L'axe A est l'axe central du cylindre formé par l'espace interne 32, et s'étend parallèlement à l'arbre 36, au centre de celui-ci.

Par les termes « axial » et « direction axiale », on entend ce qui est orienté sensiblement parallèlement à l'axe A.

Par le terme « radial » ou « direction radiale », on entend ce qui est orienté sensiblement perpendiculairement à l'axe A.

Dans l'exemple représenté, le moteur 20 est un moteur électrique synchrone.

La carcasse 34 comprend des parois latérales 46 présentant une forme de coque annulaire autour de l'espace interne 32 cylindrique, sensiblement parallèles à la direction axiale, et deux flasques 48 d'extrémité fermant l'espace interne 32 aux deux extrémités, espacés l'un de l'autre selon la direction axiale.

La carcasse 34 est destinée à contenir le rotor 38 et le stator 34 et à les protéger de l'extérieur.

Les parois latérales 46 définissent une face interne 50 sensiblement cylindrique, s'étendant en regard de l'espace interne 32, et disposée en contact avec le stator 34 et l'organe de centrage 42.

Les parois latérales 46 sont réalisées en un premier matériau.

Le premier matériau est un matériau métallique qui présente une conduction thermique importante et une densité faible. Le premier matériau est par exemple un alliage d'aluminium.

Chaque flasque 48 d'extrémité présente sensiblement une forme de disque plan, et présente une ouverture centrale 52 circulaire, centrée sur l'axe A, recevant un des paliers de roulement 40 et permettant le passage de l'arbre 36.

Au moins un des flasques 48 définit en outre une pluralité de perforations 54 traversantes, par exemple quatre perforations, régulièrement réparties autour de l'axe A.

Les flasques 48 sont réalisés avec le premier matériau.

En variante, les flasques 48 sont réalisés avec un autre matériau, par exemple en fonte, en acier, ou en alliage d'acier.

Le stator 34 est monté dans l'espace interne, de manière fixe par rapport à la carcasse 30.

Le stator 34 est propre à générer un champ magnétique dans l'espace interne 32 afin d'entraîner le rotor 38 et l'arbre 36 en rotation.

Le stator 34 comprend un noyau magnétique 56, par exemple constitué d'un empilement de tôles feuilletées, qui permet l'interaction électromagnétique entre le rotor 38 et le stator 34.

Le stator 34 comprend de plus un enroulement électrique (non représenté), pour son alimentation.

Les tôles feuilletées s'étendent sensiblement perpendiculairement à l'axe central A.

Les tôles feuilletées du noyau magnétique 56 sont maintenues les unes contre les autres par des cordons de soudure longitudinaux, s'étendant selon la direction axiale.

En variante, les tôles feuilletées du noyau magnétique 56 sont maintenues entre elles par des agrafes longitudinales, s'étendant selon la direction axiale.

Par exemple, le noyau magnétique 56 comprend quatre cordons de soudure longitudinaux s'étendant sur la surface externe du noyau magnétique 56, au voisinage des parois latérales 46, et au droit des organes de fixation 44.

Ainsi, les cordons de soudure s'étendent au droit des points de fixation de l'organe de centrage 42. Cela permet d'améliorer le maintien des organes de fixation 44.

Les cordons de soudure permettent également de faciliter l'assemblage du moteur 20 en maintenant les tôles feuilletées du noyau magnétique 56 ensemble pendant l'insertion du noyau magnétique 56 dans la carcasse 30.

Le noyau magnétique 56 est réalisé avec un second matériau, présentant des propriétés ferromagnétiques, par exemple en acier.

Le noyau magnétique 56 est disposé en appui radial contre la face interne 50 des parois latérales 46, dans des conditions normales de température et de pression. Par conditions normales, on entend une température sensiblement comprise entre 10°C et 30°C et une pression atmosphérique, c'est à dire proche de 1013 hPA.

Notamment, la carcasse 30 est chauffée pour la dilater et augmenter son diamètre interne. Le noyau magnétique 56 est alors mis en place à froid dans la carcasse 30, de manière à obtenir un serrage une fois la carcasse 30 refroidie à température ambiante.

L'appui radial permet de bloquer les mouvements de rotation autour de l'axe A ou de translation selon l'axe A du noyau magnétique 56 par rapport à la carcasse 30, notamment au cours du fonctionnement du moteur électrique 20.

Cela permet notamment de garantir le centrage du stator 34, ainsi que la bonne conversion de l'énergie électrique en énergie mécanique sous la forme d'un couple.

Le premier matériau et le deuxième matériau présentent des propriétés de dilatation thermique différentes l'un de l'autre.

Notamment, le deuxième matériau se dilate moins que le premier matériau lorsqu'ils sont soumis à des élévations de température identiques.

Par exemple, le premier matériau présente un coefficient de dilatation thermique supérieur ou égal à 0,018 mm/m/°C, notamment supérieur ou égal à 0,022 mm/m/°C.

Par exemple, le second matériau présente un coefficient de dilatation thermique inférieur ou égal à 0,016 mm/m/°C, notamment inférieur ou égal à 0,012 mm/m/°C.

Lors d'une élévation de température dans l'espace interne 32, le noyau magnétique 56 et les parois latérales 46 se dilatent. Comme les parois latérales 46 sont réalisées avec le premier matériau et que le noyau magnétique 56 est réalisé avec le second matériau, l'appui du noyau magnétique 56 sur les parois latérales 46 faiblit, et un jeu peut même apparaître entre eux. L'espace interne 32 est par exemple susceptible de subir une élévation de température de 60°C à 120°C au-dessus de la température ambiante.

L'arbre 36 est mobile en rotation par rapport à la carcasse 30 et au stator 34, autour de l'axe central A. L'arbre 36 est porté par les paliers de rotation 40, de sorte que son mouvement de rotation s'effectue avec des frottements réduits.

L'arbre 36 présente une forme sensiblement cylindrique dans l'espace interne 32, et définit deux épaulements 60 à ses extrémités engagées dans les paliers de rotation 40, de façon à bloquer les déplacements de l'arbre 36 selon la direction axiale.

Le rotor 38 comprend un ensemble de bobines reliées électriquement à un collecteur (non représentés), adaptées pour entraîner la rotation de l'arbre 36 sous l'effet d'un champ électrique généré par le stator 34.

En variante, le rotor 38 comprend une pluralité d'aimants permanents reliés au collecteur.

Le rotor 38 et le stator 34 sont séparés par un entrefer e, visible sur les figures 2 et 3. L'entrefer e est constant sur toute la périphérie du rotor 38, pour un fonctionnement optimal du moteur 20.

Les paliers de roulement 40 comprennent par exemple des roulements à billes. Les paliers de roulement 40 sont disposés entre l'arbre 36 et les flasques 48, de manière à permettre la rotation de l'arbre 38 par rapport à la carcasse 30 avec des frottements réduits.

L'organe de centrage 42 est disposé dans l'espace interne 32, en appui radial contre la face interne 50 des parois latérales 46.

L'organe de centrage 42 est agencé pour exercer un appui radial uniforme sur la face interne 50 des parois latérales 46.

Par exemple, l'organe de centrage 42 présente une forme sensiblement annulaire, et définit une surface périphérique externe sensiblement cylindrique, en appui radial sur la face interne 50.

En variante (non représentée), l'organe de centrage 42 définit une pluralité de régions d'appui distinctes régulièrement réparties autour de l'axe central A. Par exemple, l'organe de centrage 42 présente une symétrie de rotation d'axe A. Avantageusement, la symétrie de rotation est d'ordre supérieur ou égal à 3, pour garantir un centrage du stator 34 dans l'espace interne 32.

L'organe de centrage 42 est fixé au stator 34, notamment au noyau magnétique 56, selon une direction axiale.

L'organe de centrage 42 est constitué du premier matériau. Ainsi, l'organe de centrage 42 se dilate selon le même coefficient et donc au même rythme que les parois latérales 46 lors des variations de température.

Ainsi, l'organe de centrage 42 est adapté pour garantir le centrage du noyau magnétique 56 dans l'espace interne 32 malgré les variations de températures, puisqu'il se dilate avec les parois latérales 46 et maintient l'appui radial.

L'organe de centrage 42 comprend par exemple au moins trois points de fixation au noyau magnétique 56, notamment quatre points de fixation, régulièrement répartis autour de l'axe central A.

Chaque point de fixation de l'organe de centrage 42 comprend par exemple un orifice 62 défini dans l'organe de centrage 42.

Chaque orifice 62 est traversant et orienté selon la direction axiale.

Chaque orifice 62 débouche de part et d'autre de l'organe de centrage 42 et reçoit une première extrémité 64 d'un des organes de fixation 44.

Le stator 34 comprend une pluralité de conduits 66 de fixation orientés selon la direction axiale.

Chaque conduit 66 débouche en regard d'un des orifices 62 de l'organe de centrage 42 et est propre à recevoir une partie médiane 68 de l'organe de fixation 44 dont la première extrémité est reçue dans l'orifice 62.

Avantageusement, chaque conduit 66 est traversant et débouche de part et d'autre du noyau magnétique 56 selon la direction axiale.

Chaque perforation 54 est agencée en regard d'un des conduits 66, et est propre à recevoir une deuxième extrémité 70 de l'organe de fixation 44 dont la partie médiane 68 est reçue dans le conduit 66.

Avantageusement, chaque perforation 54 comprend un lamage recevant partiellement la partie médiane 68 de l'organe de fixation. Cela permet un meilleur maintien de l'organe de fixation 44.

Chaque organe de fixation 44 comprend un barreau métallique présentant la première extrémité 64 et la deuxième extrémité 70, ainsi que la partie médiane 68.

La première extrémité 64 et la deuxième extrémité 70 présentent des diamètres inférieurs à un diamètre de la partie médiane 68.

Chaque organe de fixation 44 comprend de plus deux organes de serrage 72 engagés sur la première extrémité 64 et la deuxième extrémité 70, respectivement en appui sur l'organe de centrage 42 et sur le flasque 48 définissant les perforations 54, sur des côtés opposés au stator magnétique 56.

Avantageusement, la première extrémité 64 et la deuxième extrémité 70 sont filetées et les organes de serrage 72 sont des écrous présentant un diamètre externe plus grand que le diamètre interne de l'orifice 62 de sorte que l'écrou est en appui contre l'organe de centrage 42, selon la direction axiale. Cela permet un assemblage simplifié de chaque organe de fixation 44.

En variante, la première extrémité 64 et la deuxième extrémité 70 présentent des trous filetés taraudés s'étendant selon la direction axiale, depuis l'extrémité 64, 70 respective en direction de la partie médiane 68. Les organes de serrage 72 sont alors des vis engagées dans les trous filetés, chaque vis comprenant une tête de diamètre externe plus grand qu'un diamètre interne de l'orifice 62, de sorte que la tête de vis est en appui contre l'organe de centrage 42, selon la direction axiale.

En variante, le noyau magnétique 56 présente, à température ambiante, un diamètre externe sensiblement égal au diamètre de la face interne 50. Le noyau magnétique est alors mis en place de manière ajustée dans la carcasse 30. Le blocage des mouvements du stator 34 selon les directions axiale, radiale et circonférentielle est assuré par les organes de fixation 44.

En variante (non représentée), l'organe de centrage 42 est fixé au noyau magnétique 56 de manière sensiblement continue, par exemple par un cordon de soudure circonférentiel.

En variante (non représentée), l'organe de centrage 42 est fixé au noyau magnétique 56 par une pluralité d'agrafes positionnées aux points de fixation.

Selon un autre mode de réalisation, le moteur 20 est un moteur asynchrone. Le rotor 38 comprend alors un ensemble de barres et d'anneaux formant une cage, connue sous le nom de cage d'écureuil.

Selon un autre mode de réalisation, le moteur électrique 20 n'est pas un moteur de propulsion d'un véhicule, mais un moteur électrique statique, notamment un moteur industriel.

Selon un autre mode de réalisation, l'équipement électrique selon l'invention n'est pas un moteur électrique 20 tel que décrit ci-dessus, mais un autre type d'équipement électrique comprenant une carcasse de protection contenant un stator magnétique et un rotor monté sur un arbre en rotation.

Par exemple, l'équipement électrique est un alternateur, dont l'arbre est entraîné par une turbine, et dans lequel l'interaction entre le rotor et le stator produit une puissance électrique.

L'équipement électrique 20 selon l'invention permet d'utiliser un matériau plus léger et meilleur conducteur thermique pour réaliser la carcasse de protection, tout en présentant une résistance améliorée aux dilatations thermiques, notamment celles résultant de son fonctionnement.

Il assure le centrage du stator malgré ces différences de dilatation thermiques, ce qui réduit les risques de perte d'efficacité et d'accidents, et améliore la durabilité du moteur dans le temps.

## Revendications

1. Equipement (20) électrique comprenant :
- une carcasse (30) de protection comprenant des parois latérales (46) réalisées en un premier matériau et au moins un flasque (48) d'extrémité, la carcasse (30) définissant un espace interne (32) sensiblement cylindrique présentant un axe central (A) ;
- un stator (34) réalisé en au moins un deuxième matériau, disposé dans l'espace interne (32) autour de l'axe central (A),
**caractérisé en ce que** l'équipement (20) comprend de plus :
- un organe de centrage (42), constitué du premier matériau, disposé dans l'espace interne (32), en appui radial contre les parois latérales (46),
le stator (34) étant fixé à l'organe de centrage (42) selon une direction sensiblement parallèle à l'axe central (A).

2. Equipement (20) selon la revendication 1, dans lequel l'organe de centrage (42) comprend une pluralité, de préférence au moins trois, points de fixation au stator (34), répartis régulièrement autour de l'axe central (A).

3. Equipement (20) selon la revendication 2, dans lequel chaque point de fixation de l'organe de centrage (42) comprend un orifice (62) axial traversant, le stator (34) comprenant une pluralité de conduits (66) de fixation axiaux, chaque conduit (66) débouchant en regard d'un des orifices (62) de l'organe de centrage (42),
l'équipement (20) comprenant une pluralité d'organes de fixation (44), chaque organe de fixation (44) étant engagé dans un des orifices (62) de l'organe de centrage (42) et dans le conduit (66) correspondant du stator (34).

4. Equipement (20) selon la revendication 3, dans lequel les conduits (66) du stator (34) sont traversants et débouchent en regard d'un des flasques (48), le flasque (48) comprenant des perforations (54) débouchant en regard des conduits (66), chaque organe de fixation (44) étant engagé dans une des perforations (54) du flasque (48).

5. Equipement (20) selon la revendication 3 ou 4, dans lequel au moins un des organes de fixation (44) comprend un barreau métallique présentant au moins une extrémité (64, 70) filetée.

6. Equipement (20) selon l'une quelconque des revendications 2 à 5, dans lequel le stator (34) comprend une pluralité de tôles feuilletées s'étendant sensiblement perpendiculairement à l'axe central (A), les tôles feuilletées étant fixées entre elles par des cordons de soudure s'étendant parallèlement à l'axe central (A), au droit des points de fixation de l'organe de centrage (44).

7. Equipement (20) selon l'une quelconque des revendications 1 à 6, dans lequel l'organe de centrage (44) présente une forme annulaire, et définit une surface périphérique externe en appui radial sur les parois latérales (46).

8. Equipement (20) selon l'une quelconque des revendications 1 à 7, comprenant un arbre (36) disposé dans l'espace interne (32), mobile en rotation autour de l'axe central (A), l'arbre portant un rotor (38) magnétique.

9. Equipement (20) selon la revendication 8, dans lequel l'équipement (20) est un moteur électrique.

10. Véhicule (10), notamment routier ou ferroviaire, comprenant un équipement (20) selon l'une quelconque des revendications 1 à 9.
